(19) **Europäisches Patentamt / European Patent Office / Office européen des brevets**

(11) **EP 2 811 792 B1**

(12) **EUROPEAN PATENT SPECIFICATION**

(45) Date of publication and mention
of the grant of the patent:
**30.11.2016 Bulletin 2016/48**

(51) Int Cl.:
*H04W 52/02* (2009.01)    *G06F 17/30* (2006.01)

(21) Application number: **14171203.4**

(22) Date of filing: **04.06.2014**

(54) **A method for operating a mobile telecommunication device**

Verfahren zum Betreiben einer mobilen Telekommunikationsendgerätevorrichtung

Procédé pour faire fonctionner un dispositif de télécommunication mobile

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.06.2013 US 201313911332**

(43) Date of publication of application:
**10.12.2014 Bulletin 2014/50**

(73) Proprietor: **SAP SE**
**69190 Walldorf (DE)**

(72) Inventors:
• **Herbst, Axel**
  **69190 Walldorf (DE)**
• **Gerwens, Heiko**
  **69190 Walldorf (DE)**

(74) Representative: **Richardt Patentanwälte PartG mbB**
**Wilhelmstraße 7**
**65185 Wiesbaden (DE)**

(56) References cited:
**JP-A- H11 149 516        US-A1- 2011 314 071**
**US-A1- 2012 296 883**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The disclosure relates to telecommunication systems, and particularly to a method for operating a mobile telecommunication device in an energy saving mode.

**BACKGROUND**

It is expected that several hundreds of millions of mobile devices will be sold in the next years. Power consumption in these mobile devices has become increasingly important. Application programs in the mobile devices provide a variety of accessible functionalities, for example, picture management and navigation tools etc. The ongoing trend in telecommunication is to provide mobile devices with enhanced performances that can support such mobile applications while controlling the power consumption in the mobile devices.

An example of a prior art communication system is disclosed in US 2011/314071.

**SUMMARY OF THE INVENTION**

It is an objective of embodiments of the invention to provide for a method for operating a mobile telecommunication device. Said objective is solved by the subject matter of the independent claims. Advantageous embodiments are described in the dependent claims.

In one aspect, the invention relates to a method for operating a mobile telecommunications device in a telecommunication system in an energy saving mode, the telecommunication system comprising a storage server that is connected to the mobile telecommunications device, the mobile telecommunication device comprising at least a first and second mobile application comprising first and second instructions that, when executed, send data access requests to access data entries stored in the storage server, the storage server comprising a first and second storage devices, the first storage device having higher data access performance than the second storage device. Data access performance may comprise speed of the data access and/or Input/Output operations per time interval and/or a latency for each of the read ope rations. For example, hard disk data access performance is low or much lower (e.g. slower) than the memory access. The method comprises:

- classifying, using the first instructions, the data entries into at least a first and second data class, the first and second data classes being a description of the data entries, comprising

    o assigning a first selection parameter to each data entry of the data entries, the first selection parameter having a first or a second value indicative of the first or second data class respectively;
    o ranking the first and second selection parameter values according to a predefined ranking criterion. The first (second) selection parameter values are the first selection parameters having the first (second) values. For example, if there are 10 data entries, each data entry of the 10 data entries may be assigned the first selection parameter which has either the first value or second value, which may for example results in 7 data entries assigned with the first selection parameter having the first value and 3 data entries assigned with the first selection parameter having the first value.

- sending a request to the storage server to store, in the first storage device, a first portion of the data entries having the selection parameter value ranked superior and to store a second remaining portion of the data entries in the second storage device. For example, if the first selection parameter having the first value is ranked superior compared to the first selection parameter having the second value, the data entries that are associated or assigned with the first selection parameter having the first value will be stored in the first storage device, while the data entries that are associated or assigned with the first selection parameter having the second value will be stored in the second storage device.
- classifying, using the second instructions and the first selection parameter, the second portion of data entries into at least a third and fourth data class, the third and fourth data classes being a description of the second portion of the data entries, comprising

    o assigning a second selection parameter to each data entry of the second portion of data entries stored in the second storage device, the second selection parameter having a value indicative of the third or fourth data class;

- sending a request to the storage server to move, to the first storage device, a subset of the second portion of data entries having the third data class. The subset that has been moved from the second storage device to the first storage device may be deleted from the second storage device.

- configuring the first mobile application for redirecting data access requests to at least the first portion of data entries;
- configuring the second mobile application for redirecting data access requests to at least a subset of the first portion of data entries having a selected one of the third and fourth classes;
- executing the configured first and second mobile applications to operate the mobile telecommunication device in the energy saving mode.

The first selection parameter having the first value is ranked superior to the first selection parameter having the second value may refer, for example, in case the first selection parameter is a creation date to the fact that the first value has a younger creation date than the second value.

The first mobile application and second mobile application may have access to a same at least part of the data entries.

For example, the data entries may initially be stored in the second storage device before the submission of the request to split them into the first and second storage devices.

The first mobile application may be configured for redirecting data access requests to the first portion of data entries and other data entries in the second storage device.

The second mobile application may be configured for redirecting data access requests to a subset of the first portion of data entries having a selected one of the third and fourth classes and to data entries in the second storage device.

The selected one of the third and fourth data class may be determined by a user of the mobile telecommunication device. In another example, a comparison between the two values indicating the third and fourth data classes may be performed and using the comparison results one of the third and fourth data classes may be selected. For example, the third and fourth data classes may describe respectively old and young data entries, where the selected data class may be the data class of data entries being young data entries.

The above features may have the advantage of saving resources in the mobile telecommunication device. This is because, the two applications are configured to access data that is stored in the storage device with the highest performance access i.e. less energy may be consumed at the mobile telecommunication device compared to the case where data may be stored in the less performant storage device. In addition, the first and second applications are configured such that they have access only to the required data entries. The data entries to which both applications are accessing is reduced to a minimum.

These features may have another advantage of allowing an optimal usage of resources in the mobile telecommunication system by storing the data dependent on their frequent usage.

The present method may provide an optimal integration of multiple applications having access to a same initial sample of data entries.

According to one embodiment, the first and second mobile applications are configured to concurrently run in the mobile telecommunication device.

Concurrent access to the same data entries may have side effects (e.g. load increase or when an application tries to modify data that the other application is actively using), that may be limited by the present method by reducing to a minimum the common set of data that is accessed by the two applications.

According to one embodiment, classifying using the first instructions comprises processing the first instructions on multiple data portions of the data entries, determining the system load level caused by the access to each data portion of the multiple data portions, comparing the system load levels with a predefined load threshold and determining the first and second class of data entries based on the results of the comparison.

The system load level is the amount of computational work that the mobile telecommunication device performs for the access to each data portion of the multiple data portions. The predefined load threshold may be, for example, the load average that represents the average system load over the multiple data portions and/or over a period of time.

According to one embodiment, classifying using the first instructions comprises parsing the first instructions for determining an oldest creation date of data entries to be accessed by the first mobile application, wherein data entries of the first class and second class have creation dates smaller and higher than the oldest creation date respectively.

According to one embodiment, the first and second data classes are predefined data classes by a user of the mobile telecommunications device. For example, the first selection parameter may be the access frequency to a data entry. The first and second values may indicate for example a high and low access frequency. For example, the first value may be a Boolean that is set to "true" for indicating the high access frequency and the second value may be a Boolean that is set to "false" for indicating the low access frequency. The low and high access frequencies may be determined by comparing the access frequency of each data entry with a predefined access frequency threshold, and based on the comparison results the data entry may be assigned the first or second value.

According to one embodiment, classifying using the second instructions and the first selection parameter comprises providing the second selection parameter different from the first selection parameter, parsing the second instructions for determining an oldest creation date of data entries to be accessed by the second mobile application, wherein data entries of the third and fourth classes have creation dates smaller and higher than the oldest creation date respectively.

According to one embodiment, the predefined ranking criterion comprises a system load level, wherein ranking comprises ranking one parameter value of the first and second parameter values superior to the other parameter value if it has a higher system load level. In this case the data entries with higher load level may be moved to the higher performant storage e.g. main memory in order to reduce the load level.

This embodiment may be advantageous as it may further reduce the overall system load in the mobile telecommunication device. This is in contrast to the method where the data entries are randomly split between the first and second storage devices.

In an alternative example, ranking comprises ranking one parameter value of the first and second parameter values superior to the other parameter value if it has a lower system load level. This may be advantageous in case only the data having the lower system load may be used/accessed e.g. for test or validation purpose etc.

According to one embodiment, the predefined ranking criterion comprises a data entry age, wherein ranking comprises ranking one parameter value of the first and second parameter values superior to the other parameter value if it has a youngest creation date.

In an alternative example, ranking comprises ranking one parameter value of the first and second parameter values superior to the other parameter value if it has an oldest creation date.

According to one embodiment, redirecting comprises rewriting a query from the first application to exclude entries of the second portion of data entries.

According to one embodiment, the query is a structured query language statement and said re-writing comprises automatically appending a statement extension to the structured query language statement string.

According to one embodiment, the first mobile application is an updated version of the second mobile application, wherein executing further comprises comparing the results of processing the first mobile application with the results of processing the second mobile application and maintaining one of the first and second mobile applications in the mobile telecommunication device based on the comparison result.

According to one embodiment, the first mobile application is an On Line Analytical Processing (OLAP) application and the second mobile application is an On Line Transactional Processing (OLTP) application.

According to one embodiment, the first mobile application is an OLTP application and the second mobile application is an OLAP application.

According to one embodiment, the first storage device comprises in-memory columnar storage and the second storage device comprises disk-based storage.

In another aspect, the invention relates to a computer program product comprising computer executable instructions to perform the method steps of the method of any one of the preceding embodiments.

In another aspect, the invention relates to a mobile telecommunications device in a telecommunication system, the telecommunication system comprising a storage server that is connected to the mobile telecommunications device, the mobile telecommunication device comprising at least a first and second mobile application comprising first and second instructions that, when executed, send data access requests to access data entries stored in the storage server, the storage server comprising a first and second storage devices, the first storage device having higher data access performance than the second storage device. The mobile telecommunication system is configured for:

- classifying, using the first instructions, the data entries into at least a first and second data class, the first and second data classes being a description of the data entries, comprising

  o assigning a first selection parameter to each data entry of the data entries, the first selection parameter having a first or a second value indicative of the first or second data class respectively;
  o ranking the first and second selection parameter values according to a predefined ranking criterion;

- sending a request to the storage server to store, in the first storage device, a first portion of the data entries having the selection parameter value ranked superior and to store a second remaining portion of the data entries in the second storage device;
- classifying, using the second instructions and the first selection parameter, the second portion of data entries into at least a third and fourth data class, the third and fourth data classes being a description of the second portion of data entries, comprising

  o assigning a second selection parameter to each data entry of the second portion of data entries stored in the second storage device, the second selection parameter having a value indicative of the third or fourth data class;

- sending a request to the storage server to move, to the first storage device, a subset of the second portion of data entries having the third data class;
- configuring the first mobile application for redirecting data access requests to at least the first portion of data entries;
- configuring the second mobile application for redirecting data access requests to the first portion of data entries and the subset of the second portion of data entries;
- executing the configured first and second mobile applications to operate the mobile telecommunication device in the energy saving mode.

In another aspect, the invention relates to a system comprising a first storage device; a second storage device, wherein a database, containing entries, is stored across the first and second storage devices, entries in the second storage medium being default invisible for online transactional processing; and a computing device comprising: a memory storing processor-executable program code, and a processor to execute the processor-executable program code in order to cause the computing device to: identify, at a central software layer processor between the database and an application, a subset of the entries stored in the first storage medium as being default visible for online transactional processing, wherein entries stored in the first storage medium that are not within the subset are default invisible for online transactional processing.

According to one embodiment, entries in the first storage device are accessible by the application more quickly as compared to entries in the second storage device.

According to one embodiment, the first storage device comprises in-memory columnar storage and the second storage device comprises disk-based storage.

According to one embodiment, said identifying includes determining a portion of the subset using check logic implemented with coded algorithms at an application server on top of the database.

According to one embodiment, said identifying further includes determining a remaining portion of the subset using customer-defined residence time conditions.

According to one embodiment, the customer-defined residence time conditions are associated with business lifecycle data.

According to one embodiment, a query from the application is automatically re-written to exclude entries not in the subset.

According to one embodiment, the query is a structured query language statement and said re-writing comprises automatically appending a statement extension to the structured query language statement string.

According to one embodiment, an aging column is added to the database table and a date is stored into the aging column for an entry to transition the entry out of the subset that is default visible for online transactional processing.

According to one embodiment, an entry is transitioned from the first storage device to the second storage device based on a technical configuration.

In another aspect, the invention relates to a computer-implemented method, comprising: storing a database, containing entries, across first and second storage medium, entries in the second storage medium being default invisible for online transactional processing; and identifying, at a central software layer processor between the database and an application, a subset of the entries stored in the first storage medium as being default visible for online transactional processing, wherein entries stored in the first storage medium that are not within the subset are default invisible for online transactional processing.

In another aspect, the invention relates to a non-transitory, computer-readable medium storing program code, the program code executable by a processor of a computing system to cause the computing system to perform a method, the method comprising: storing a database, containing entries, across first and second storage medium, entries in the second storage medium being default invisible for online transactional processing; and identifying, at a central software layer processor between the database and an application, a subset of the entries stored in the first storage medium as being default visible for online transactional processing, wherein entries stored in the first storage medium that are not within the subset are default invisible for online transactional processing.

It is understood that one or more of the aforementioned embodiments may be combined as long as the combined embodiments are not mutually exclusive.

## BRIEF DESCRIPTION OF THE DRAWINGS

FIG. 1 is a block diagram of a system according to some embodiments.

FIG. 2 is a flow diagram of a process according to some embodiments.

5

FIG. 3 illustrates data storage in accordance with some embodiments.

FIG. 4 is a tabular representation of portions of a database table according to some embodiments.

FIG. 5 is a block diagram of an apparatus according to some embodiments.

FIG. 6 illustrates an example of a system architecture in accordance with some embodiments.

FIG. 7 is a flow diagram of a process to re-write queries according to some embodiments.

FIG. 8 schematically depicts a mobile telecommunication device according to the present disclosure.

**DETAILED DESCRIPTION**

The following description is provided to enable any person in the art to make and use the described embodiments and sets forth the best mode contemplated for carrying out some embodiments. Various modifications, however, will remain readily apparent to those in the art.

For an in-memory database, the phrase "data aging" may refer to the storage of only the most relevant data in a Dynamic Random Access Memory ("DRAM") device, also referred to as "hot" data, while less relevant "cold" data resides primarily on a less expensive storage medium. In some cases, however, neither typical caching nor archiving and the corresponding access methods work well (with respect to performance and cost), such as when different usage scenarios need to be supported by the same database on a non-replicated single data model, especially when the database is associated with an in-memory database. By way of example, a "one size fits all" hot/cold database partition might not be satisfactory when both OLAP and OLTP scenarios need to be supported by a single database implementation. Such an approach may, for example, result in a bad compromise, e.g., by being too costly for OLTP use cases, by having too short of a data history, by not supporting an end user's potential decision to spend more money for DRAM for the sake of OLAP performance and quality, *etc.*

Moreover, columnar storage of an in-memory database may further aggravate the performance penalty when OLTP queries evaluate cold data (even if the data does not actually satisfy the end user's data selection - which is only known after the data is loaded) because the system may load a complete column (of a table or a partition) that contains the requested field, including all hot and cold data for that column. Further, many OLTP queries follow the (SQL-expressed) pattern of "SELECT * FROM table" and, as a result, the queries request that all columns (all data of the table/partition) be loaded into memory.

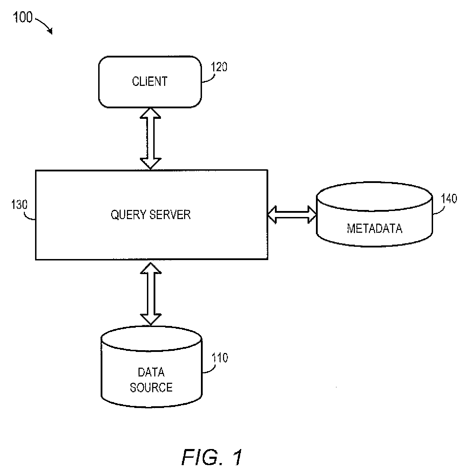

To help avoid such compromises and performance penalties, FIG. 1 is a block diagram of a system 100 according to some embodiments. The system 100 includes a data source 110, a client 120, and a query server 130. The data source 110 may comprise any query-responsive data source or sources that are or become known, including but not limited to a Structured-Query Language ("SQL") relational database management system. The data source 110 may comprise a relational database, a multi-dimensional database, an eXtendable Markup Language ("XML") document, or any other data storage system storing structured and/or unstructured data. The data of the data source 110 may be distributed among several relational databases, warehouses, multi-dimensional databases, and/or other data sources. Embodiments are not limited to any number or types of data sources. For example, the data source 110 may comprise one or more OLAP databases, spreadsheets, text documents, presentations, *etc*.

In some embodiments, the data source 110 is implemented in Random Access Memory (*e.g.*, "RAM" cache memory for storing recently-used data) and one or more fixed disks (e.g., persistent memory for storing their respective portions of the full database). Alternatively, the data source 110 may implement an "in-memory" database, in which volatile (*e.g.*, non-disk-based) memory (*e.g.*, RAM) is used both for cache memory and for storing its entire respective portion of the full database. In some embodiments, the data of the data source 110 may comprise one or more of conventional tabular data, row-based data stored in row format, column-based data stored in columnar format, and object-based data. The data source 110 may also or alternatively support multi-tenancy by providing multiple logical database systems which are programmatically isolated from one another. Moreover, the data of the data source 110 may be indexed and/or selectively replicated in an index to allow fast searching and retrieval thereof.

Metadata 140 may provide information regarding the structure, relationships and meaning of the data stored within the data source 110. This information may be generated, for example, by a database administrator. According to some embodiments, the metadata 140 includes data defining the schema of database tables stored within the data source 110. A database table schema may specify the name of the database table, columns of the database table, the data type associated with each column, and other information associated with the database table.

The query server 130 generally provides data of the data source 110 to reporting clients, such as the client 120, in response to instructions (e.g., SQL statements) received therefrom. In some embodiments, the query server 130 receives an instruction from the client 120. The query server 130 generates an execution plan based on the instruction and on the metadata 140. The execution is forwarded to the data source 110, which executes the plan and returns a dataset based on the SQL script. The query server 130 then returns the dataset to the client 120. Embodiments are not limited thereto.

The client 120 may comprise one or more devices executing program code of a software application for presenting end user interfaces to allow interaction with the query server 130. Presentation of an end user interface may comprise any degree or type of rendering, depending on the type of user interface code generated by the query server 130. For example, the client 120 may execute a Web Browser to receive a Web page (*e.g.*, in HTML format) from the query server 130, and may render and present the Web page according to known protocols. The client 120 may also or alternatively present user interfaces by executing a standalone executable file (*e.g.*, an .exe file) or code (*e.g.*, a JAVA applet) within a virtual machine.

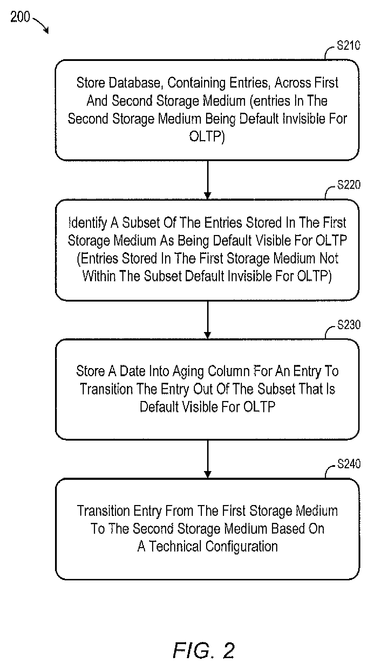

The elements of the system 100 of FIG. 1 may operate in accordance with any of the embodiments described herein. For example, FIG. 2 comprises a flow diagram of a process 200 according to one embodiment. In some embodiments, various hardware elements of system 100 execute program code to perform the process 200. The process 200 and all other processes mentioned herein may be embodied in processor-executable program code read from one or more of non-transitory computer-readable media, such as a floppy disk, a CD-ROM, a DVD-ROM, a Flash drive, and a magnetic tape, and then stored in a compressed, uncompiled and/or encrypted format. In some embodiments, hardwired circuitry may be used in place of, or in combination with, program code for implementation of processes according to some embodiments. Embodiments are therefore not limited to any specific combination of hardware and software.

Initially, at S210 a database containing entries is stored across first and second storage medium, with the entries in the second storage medium being default "invisible" for OLTP access. That is, a typical OLTP query generated by an end user will not return results associated with entries that are stored in the second storage medium (*e.g.*, and thus, the entries in the second storage medium are "invisible" from an OLTP perspective). The entries in the first storage medium may be, for example, accessible by an application more quickly as compared to entries in the second storage medium. In some embodiments, the first storage medium comprises in-memory columnar storage and the second storage medium comprises disk-based storage.

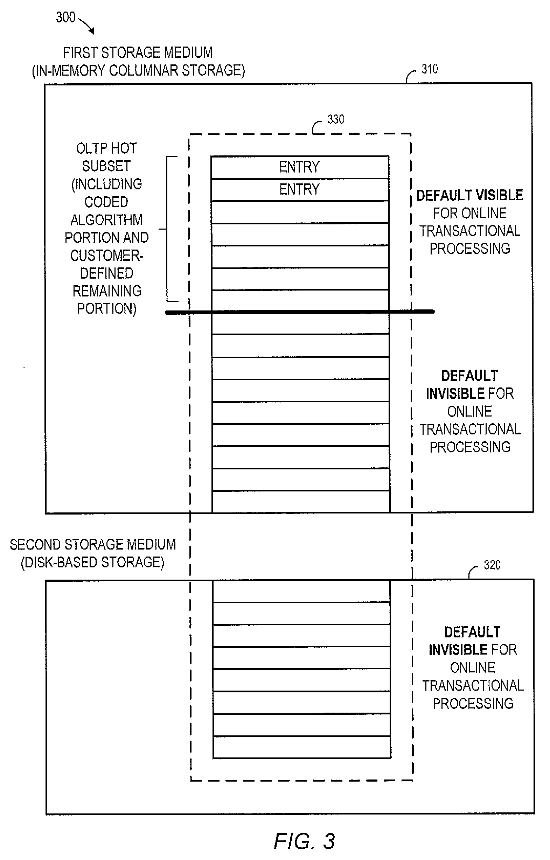

A subset of the entries stored in the first storage medium may be identified at S220 as being default "visible" for OLTP accesses. Moreover, entries stored in the first storage medium that are not within the subset are default invisible for OLTP accesses. Note that in some embodiments, as will be described herein, the invisibility of data may be achieved by automatic query re-writes in a generic client side layer of an application server of an OLTP application. The identification at S220 might be performed, for example, by a central software layer processor between the database and an application. Consider, for example, FIG. 3 which illustrates data storage 300 in accordance with some embodiments. The data storage 300 includes a first storage medium 310 (*e.g.*, in-memory columnar storage) and a second storage medium 320 (*e.g.*, disk-based storage). A database 330 having entries is stored such that it spans both the first storage medium 310 and the second storage medium 320. A subset of the database 330 in the first storage medium 310 is identified as being default visible for OLTP. That is, entries in that subset may be thought of as being "hot" data from an OLTP perspective. Entries in the first storage medium 310 that are not within the subset, as well as all entries stored in the second storage medium 320, are default invisible for OLTP, and may be considered "cold" data from an OLTP perspective.

According to some embodiments, determining some of the OLTP-hot subset of the database 330 may be based on check logic with coded algorithms at an application server on top of the database 330. The check logic may be associated with built-in conditions (*e.g.*, hard coded) and pre-requisite checks based on status information (*e.g.*, whether a financial document has cleared) and/or logical conditions (*e.g.*, whether there is still an open order for delivery) that define a minimum set of OLTP-hot entries. Moreover, determining the rest of the OLTP-hot subset of the database 330 may be based on customer-defined residence time conditions. These customer-defined residence time conditions may be, for example, associated with business lifecycle data (*e.g.*, a customer might decide that an entry associated with purchase order that was fulfilled within the last 30 days must always remain within the OLTP-hot subset).

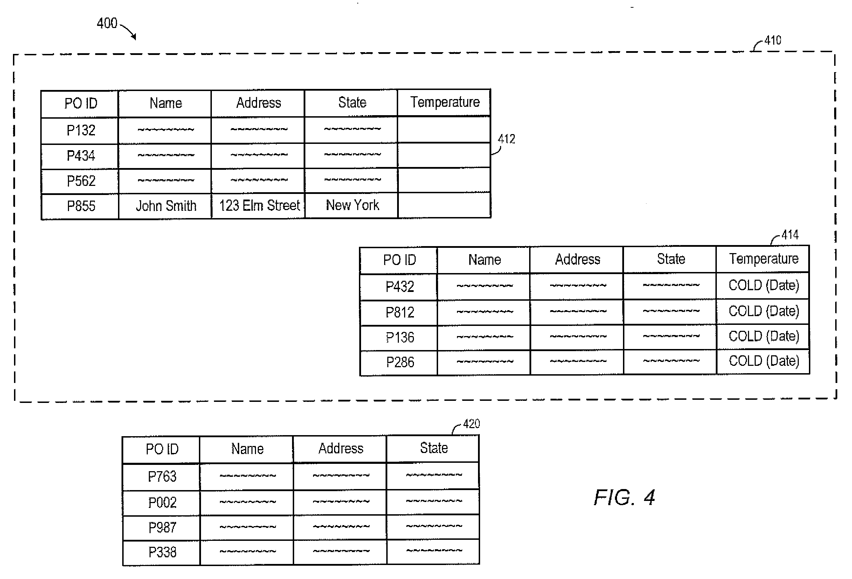

Referring again to FIG. 2, an "aging" column may be added to the database, and the central software layer processor might store a date into the aging column for a particular entry at S230 to transition the entry out of the subset that is default visible for OLTP access. FIG. 4 is a tabular representation 400 of portions of a database table having entries according to some embodiments. Each entry may store, for example, a Purchase Order ("PO") identifier, a name, an address, a state, a delivery date, a total price, a currency indicator, etc. In particular, there is a first portion 412 (OLTP-hot representing the subset identified in FIG. 3) within a first storage medium 410, a second portion 414 (OLTP-cold) within the first storage medium 410, and a third portion 420 (also OLTP-cold) within a second storage medium. According to some embodiments, an aging column ("Temperature") is added to the first and second portions 412, 414 in the first storage medium 410. Entries having nothing in this aging column ("initial" state) are considered OLTP-hot and entries storing a "cold" indication (*e.g.*, date information) are considered OLTP-cold. That is, writing a "cold" indication into the temperature column for the customer identifier entry "P855" of the first portion 412 will cause that entry to be moved to the second portion 414 (transitioning from hot to cold for OLTP). Note that as used herein, an entry storing "nothing" might refer to any value that is associated with the hot semantics. For example, an initial date of 00.00.0000 or 99.99.9999 might be chosen. In the case of 99.99.9999, a query including a subset of OLTP cold and hot data would just need to include "≥ any date" in the where clause.

Referring again to FIG. 2, at S240 an entry may be transitioned from the first storage medium to the second storage medium based on a technical configuration. That is, a database entry may eventually migrate from the relatively fast storage medium to the relatively slow storage medium. The "technical configuration" might be based on the age of the data and/or a size of the first storage medium and may be selected based on performance goals versus total cost of ownership ideas.

Note that, as used herein, the idea of "hot" and "cold" storage may refer to where data resides so that it can be processed. In some cases, DRAM may be used for HOT data but in other cases additional persistent (permanent) storage of this data may be on disk. If the system can only operate on data when it is loaded into memory, aging may help minimize the set of data that must be loaded (and may be preloaded before it is actually needed) into memory as a relatively scarce and expensive resource. Cold data may remain primarily on disk and might not be loaded into memory before it is actually requested. Also, cold data may be loaded and unloaded differently so that hot data gets preference with respect to surviving in memory.

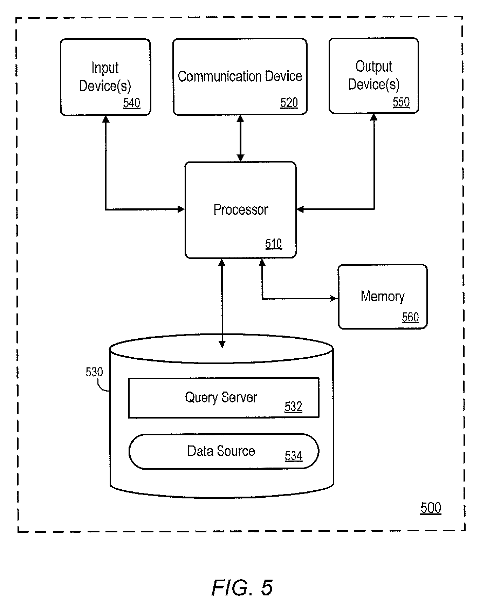

FIG. 5 is a block diagram of an apparatus 500 according to some embodiments. The apparatus 500 may comprise a general-purpose computing apparatus and may execute program code to perform any of the functions described herein. The apparatus 500 may comprise an implementation of the query server 130, the data source 110, or of the entire system 100 of FIG. 1. The apparatus 500 may include other unshown elements according to some embodiments.

The apparatus 500 includes a processor 510 operatively coupled to a communication device 520, a data storage device 530, one or more input devices 540, one or more output devices 550 and a memory 560. The communication device 520 may facilitate communication with external devices, such as a reporting client, or a data storage device. The input device(s) 540 may comprise, for example, a keyboard, a keypad, a mouse or other pointing device, a microphone, knob or a switch, an Infra-Red ("IR") port, a docking station, and/or a touch screen. The input device(s) 540 may be used, for example, to enter information into apparatus 500. The output device(s) 550 may comprise, for example, a display (e.g., a display screen) a speaker, and/or a printer.

The data storage device 530 may comprise any appropriate persistent storage device, including combinations of magnetic storage devices (e.g., magnetic tape, hard disk drives and flash memory), optical storage devices, Read Only Memory (ROM) devices, etc., while memory 560 may comprise RAM.

The query server 532 may comprise program code executed by processor 510 to cause apparatus 500 to perform any one or more of the processes described herein. Embodiments are not limited to execution of these processes by a single apparatus. A data source 534 may implement the data source 110 as described above. As also described above, the data source 110 may be implemented in volatile memory such as memory 560. The data storage device 530 may also store data and other program code for providing additional functionality and/or which are necessary for operation of apparatus 500, such as device drivers, operating system files, etc.

The apparatus 500 may implement any of the embodiments described herein. According to some embodiments, the apparatus 500 manages hot/cold management that serves both OLAP and OLTP scenarios on top of a columnar in-memory database. Note that embodiments are not restricted to columnar in memory databases. The same approaches may be applied in any type of database, such as by adding a temperature identification to entries. For a columnar database, the advantages of approaches described herein may be more substantial because the standard caching approaches might not be applicable. In particular, the apparatus 500 may, for OLTP, perform application checks periodically to decide which data qualifies for a transition from hot to cold (that is, which data should no longer be available for operational processes). These age checks might be based on status information (*e.g.* whether a financial document was cleared) and/or logical conditions (*e.g.* existence checks whether there is still an order for a delivery). The checks could be aligned with a default behavior so that, after aging, cold data entries are no longer visible, unless explicitly requested by an end user. Note that the alignment may be chosen so that the implemented business functionality may still work as expected with the now smaller subset of default visible data (e.g., a dunning run may still need to function and, as a result, open items might not be moved to cold storage).

According to some embodiments, the apparatus 500 may age data according to business lifecycle information known to OLTP applications and may also take customer preferences into account. For example, two-level checks might be performed: (1) built-in (logical) and (2) time-based (customer-controlled) checks might determine when to move hot data to cold partitions. The built-in checks may provide semantically correct query results when delivering only hot data to an end user. The additional time-based checks may allow for trade-offs between the convenience of having more data visible and quickly accessible versus the overall cost of the system.

The apparatus 500 may also manage OLAP queries such that the OLAP queries do not need to consider the complete data set of cold and hot data. Note that customers may configure the system to balance performance for more frequent OLAP queries versus the overall cost of the system (e.g., including a total main memory cost). Whether OLTP-cold data is placed on a disk right away or stays in-memory may be controlled by another configuration that takes the typical OLAP workload into account. That is, the apparatus 500 may decouple OLTP-optimized visibility from storage media allocation according to technical settings.

In contrast to typical data archiving, the apparatus 500 may keep the data completely in the database, within the same tables. Moreover, the transfer between hot and cold may take application knowledge into account. This is because the use of database statistics may be inherently suboptimal, or even not applicable, in real life systems may be avoided. As a result, the apparatus 500 may be simplified because no additional infrastructure is required for the purpose of data volume management. In addition, hot and cold data may be accessible and visible via standard SQL queries without needing to adjust client-side SQL code. In the case of OLAP queries with time constraints, the apparatus 500 may facilitate automatic filtering to the relevant data partitions to improve performance. Together with the idea of adjusting the range of hot data, the performance of important and frequent OLAP queries can be improved. Further, only minor adjustments might be required for OLTP type applications to enable access to cold data in the exceptional case when cold data is needed for some OLTP queries.

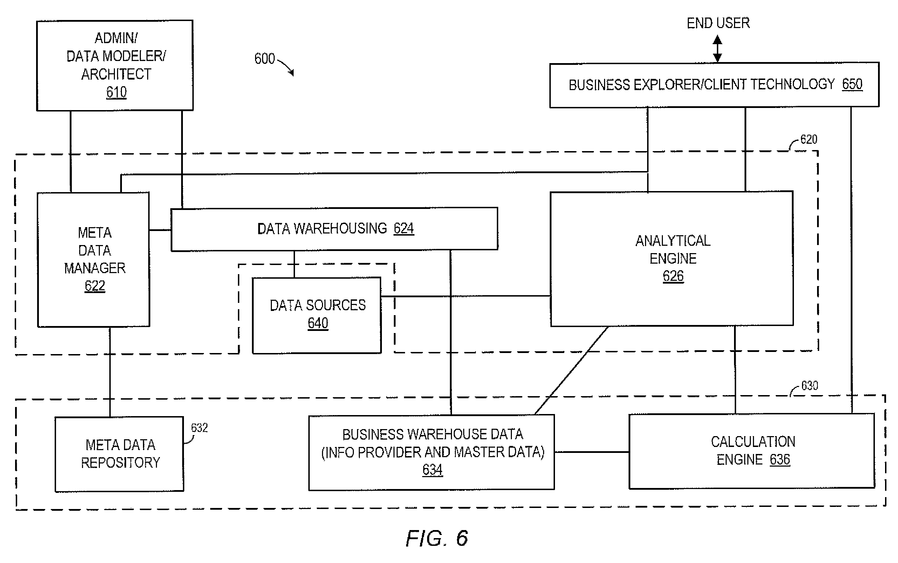

FIG. 6 illustrates an example of a system architecture 600 in accordance with some embodiments. The system 600 may include an administrator /data modeler/architect component 610 that interacts with a business warehouse 620 to define a database 630. The business warehouse 620 may include, for example, a meta data manager 622 that communicates with a meta data repository 632 in the database 630. The business warehouse 620 may further include a data warehousing component 624 (*e.g.*, to access data sources 640) and an analytical engine 626 that communicates with both the business warehouse data 634 and a calculation engine 363 of the database 630. In this way, an end user may utilize a business explorer/client technology component 650 to communicate with the business warehouse 620 and/or the calculation engine 636 of the database 630 in accordance with any of the embodiments described herein.

As compared to traditional systems, in-memory databases, especially those with columnar storage, may allow for more data can be processed (*e.g.*, searched for, filtered, combined, aggregated, and/or updated) more quickly because disk Input Output ("IO") operations (of intrinsically higher latency and lower transfer rate than DRAM IO) are avoided. In addition, in-memory computing - and especially a column-wise data organization - may lead to new reporting applications (such as OLAP applications for year-to-year comparisons, planning, prediction, data mining, and/or sentiment analysis) as well as applications for creating and changing data (such OLTP applications). That is, OLTP and OLAP may no longer be separate systems with redundant data. Instead, OLTP and OLAP may represent different data usage scenarios within a single system 600.

As memory may be limited, because of technical limitations or cost considerations, more "relevant" data may be treated better as compared to less relevant data. For example, data archiving and/or caching may help accelerate access to recently used data. Note, however, that typical caching and/or archiving and corresponding access methods may be inadequate with respect to performance and/or cost if both usage scenarios (OLAP and OLTP) are combined on top of a single database on a non-replicated data model, especially if when the model is associated with an in-memory database.

According to some embodiments described herein, "hot" for OLTP is considered differently as compared to "hot" for OLAP in general, and this may be especially true in the case of columnar storage. For OLAP scenarios, a separation of data into "hot" and "cold" by time may be desired, because OLAP queries usually have a time restriction, and more recent data is queried much more often as compared to older data. Further note that OLAP may require a longer history of data (*e.g.*, to support simulations, trend analysis, and year-to-year reporting) to be considered "hot" to support good query performance and result quality (*e.g.*, the reliability of predictions). In contrast, OLTP typically only needs data for a shorter period of time (*e.g.*, 3 months or 2 years). However, there may be important exceptions to this rule. For example, some data may need to be considered "hot" for a longer period of time (e.g., open items in financials). The list of open items for a customer might need to be produced quickly regardless of the creation date of the financial items. As a result, cutting off a query based on a time criteria, in an attempt to achieve good performance, may not be acceptable from a functional point of view. That is, a simple time-based separation of the data into hot and cold categories may not be sufficient to support OLTP processing. As another example, a dunning run may need to consider all open items. The achieve this, open items may be kept as long as needed in the hot area. Depending on detailed functional requirements, this may lead to the fact that some open items can never be moved to the cold storage. That is, while the application program selects open items for the dunning run, there may be no possibility to add a time constraint to the query.

Some embodiments described herein, such as the system 600 of FIG. 6, may allow for a balance between an overall price of the system 600 (e.g., including main memory cost) and the overall performance of the system 600 for a typical OLAP workload while still providing strong functional abilities for OLTP accesses.

According to some embodiments, the system 600 may be associated with application checks for OLTP that are periodically carried out to decide which data qualifies for a transition from "hot" to "cold," or which data shall no longer be available for operational reporting. The checks may be based on status information (e.g., whether a financial document was cleared) and/or logical conditions (e.g., existence checks whether there is still an order for a delivery). According to some embodiments, the checks are aligned with a default behavior so that, after aging, "cold" data is no longer visible unless explicitly requested by an end user. That is, the result of SQL queries that are issued against the database shall be correct from the end user's point of view even if only the "hot" data is returned.

These prerequisite checks that determine the minimum of the OLTP "hot" subset may comprise built-in conditions that are hard-coded. According to some embodiments, a time component may prolong the age of data entries (even after all built-in conditions are met for selected data). For example, a customer-configurable time might be passed before the data finally qualifies for the OLTP "hot" to "cold" transition. Such checks, which may correspond to a subsequent access and take residence time into account, may be implementable on a business object level. According to some embodiments, decision logic that is in place for determining the archivability of objects for data aging may be reused for this purpose. Note that, for a qualifying object, a fetched set of records from stored database tables might not be written into an archive file but instead only be marked as "cold" records.

As described with respect to FIG. 4, the system 600 may update an additionally introduced table column ("aging" or "temperature" column) with a value, such as a creation date of a business object, to indicate that an entry is OLTP "cold." This might be performed, for example, at the runtime of the aging process. In addition, at build time, tables may have been partitioned according to the aging column. Finally, all default accesses may be restricted to "hot" data by a query rewrite, such as "...WHERE aging_column IS NULL." Note that NULL might be replaced by any predetermined value (*e.g.*, a date of 00.00.000 or 99.99.9999). This type of query rewrite may allow for partition pruning. For example, the system 600 may recognize that "cold" data does not contribute to the result and, as a result, data from partitions with filled aging values do not be loaded, providing improved response times for "hot" data.

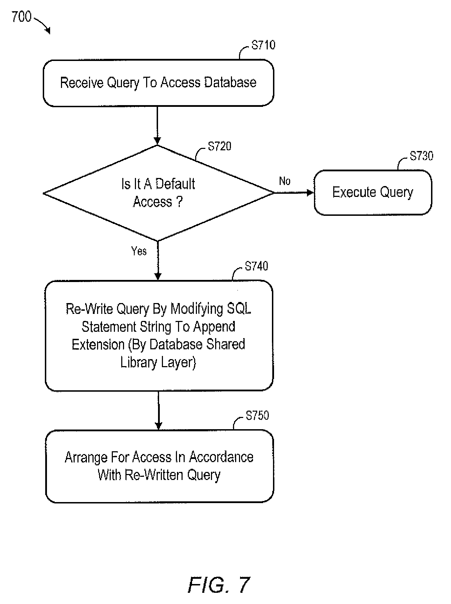

According to some embodiments, the system 600 may rewrite queries in a central software layer between the database and the application, such that only exceptional accesses to "cold" data will be signaled by the application. For example, FIG. 7 is a flow diagram of a process 700 to re-write queries according to some embodiments. A query to access a database is received at S710 and it is determined if the query is a "default" access at S720 (that is, a default query will not need to access cold data). If it is not a default access at S720, the query may be executed as normal at S730. If it is a default access at S720, the query may be re-written at S740. With such an approach, only a few coding places may need to be changed in the exceptional case, and the default visibility of "hot" data for the majority of the existing coding may work without changing the application. According to some embodiments, a query rewrite might not be implemented as appending an SQL WHERE condition in the usual SQL syntax. Instead, the system 600 may modify the SQL statement string, so that a statement extension (a special SQL syntax extension) is appended by a database specific connector/driver software module. Note that the "hot" partitions may be placed in memory and the "cold" partitions may reside in memory or on disk (to meet cost savings expectations). In either case, the system 600 may arrange for access to data in accordance with the re-written query at S750.

The system 600 may age data according to business lifecycle information known to OLTP applications while taking customer preferences into account. The two levels of checks may include (1) built-in (logical) rules and (2) time-based (customer controlled) rules to decide when to move OLTP "hot" data to "cold" partitions. The built-in checks help ensure semantically correct query results when delivering only "hot" data to the end user. The additional time-based checks may permit trade-offs between the convenience of having more data visible and accessible fast verses the overall cost of the system 600.

According to some embodiments, OLAP queries do not need to consider the complete data set of "cold" and "hot" data. For example, different "cold" and "hot" separations may be provided for OLAP as compared to OLTP. Note that the technical approach for OLAP may be similar to the implementation provided for OLTP, such as by using a time based criteria. For example, a date may be written to the aging column to trigger a move of the data from the "hot" to the "cold" partition. By further portioning the "cold" area into time ranges according to the aging column, the system 600 may further leverage partition pruning if OLAP queries contain the aging column as an additional filter criteria. This may reduce the search space of the queries, and, as a result, the queries may be executed more quickly. Note that the date and time criteria used in the OLAP queries to filter the data might not be exactly the aging column, because the set of records that has empty values in the aging column (i.e., the "hot" subset for OLTP) should also be included. However, the aging column may be closely related to the date and time criteria used in the OLAP queries for those entries where the aging column is present. In the simplest case, the aging column (if it is filled) may contain exactly the same value as the time criteria used in the OLAP query. As a result, the system 600 may expand the query with a filter on the aging column using the same filter as the time criteria of the original query while also allowing initial values in the aging condition:

where ... and (aging column between date_low and date_high or aging column is initial).

Note that SQL might only be aware that the aging column "IS NULL" instead of a value defined as "initial." When the aging column contains dates that are smaller than or equal to the time criteria, the system 600 may enhance the query by adding a minimal date equal to the time criteria:

aging column ≥ date_low or aging column is initial.

By ensuring (in embodiments that fill the aging column) that one of these two conditions is met, the system 600 may automatically add a filter to the aging column and thereby enable efficient partition pruning.

Some embodiments may enable the system 600 to be configured with respect to a balance between performance for more frequent OLAP queries and an overall price (including the cost of main memory). Whether OLTP-considered "cold" data is stored on a disk right away or stays in memory is controlled by a configuration that takes the typical OLAP workload into account. Thus, some embodiments may decouple OLTP-optimized visibility from storage media allocation according to technical settings. One way to achieve this is setting a capability limit on a partition level to decide whether "overflowing" data is no longer treated as "hot" (but is instead treated as "cold"). The minimum amount of data that needs to be placed in the "hot" subset are those partitions which contain initial values in the aging column (*i.e.*, the column is empty) to support OLTP queries. However, to facilitate good performance for OLAP queries, the system 600 may also place the "younger" partitions of OLTP-aged data into the "hot" subset. This may be especially beneficial for reporting of relatively recent data, which may not be visible by default in the OLTP part of an application (*e.g.*, to support year to year or quarter to quarter comparisons and planning applications).

The foregoing diagrams represent logical architectures for describing processes according to some embodiments, and actual implementations may include more or different components arranged in other manners. Other topologies may be used in conjunction with other embodiments. Moreover, each system described herein may be implemented by any number of devices in communication via any number of other public and/or private networks. Two or more of such computing devices may be located remote from one another and may communicate with one another via any known manner of network(s) and/or a dedicated connection. Each device may comprise any number of hardware and/or software elements suitable to provide the functions described herein as well as any other functions. For example, any computing device used in an implementation of system 100 may include a processor to execute program code such that the computing device operates as described herein.

All systems and processes discussed herein may be embodied in program code stored on one or more non-transitory computer-readable media. Such media may include, for example, a floppy disk, a CD-ROM, a DVD-ROM, a Flash drive, magnetic tape, and solid state RAM or ROM storage units. Embodiments are therefore not limited to any specific combination of hardware and software.

Embodiments described herein are solely for the purpose of illustration. Those in the art will recognize other embodiments may be practiced with modifications and alterations to that described above.

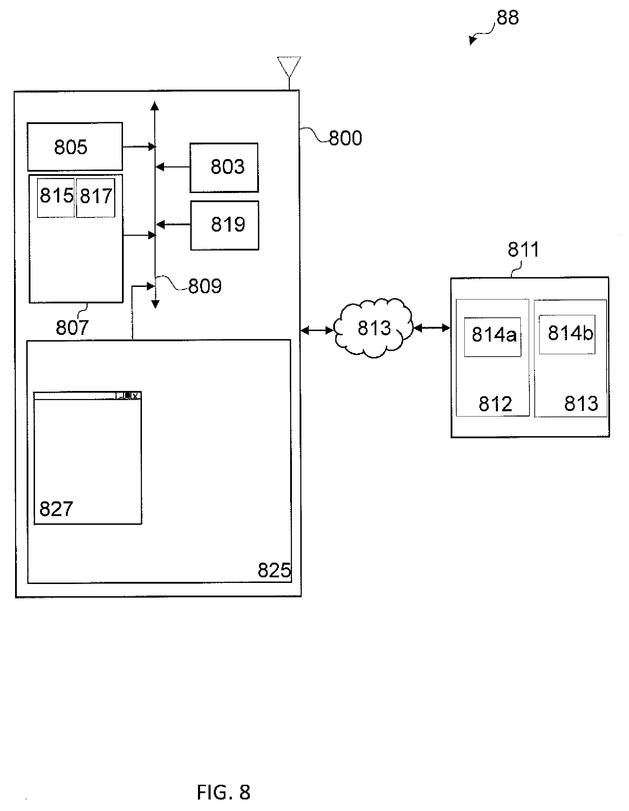

Fig. 8 shows an exemplary mobile telecommunication device 800 in a telecommunication system 88. The telecommunication system 88 may comprise for example a cellular digital telecommunication system. The mobile telecommunication device 800 may comprise a processor 803, a transceiver 805, a memory 807 each capable of communicating with one or more components of the mobile telecommunication device 800. For example, all components are coupled to a bidirectional system bus 809.

The processor 803 may be a microprocessor, a single core processor, a multicore processor or the like. The processor 803 may control the operation of the mobile telecommunication device 800. The transceiver 805 can be implemented as a transmitting and receiving component of the mobile telecommunication device 800.

The mobile telecommunication device 800 may further comprise a display device 825 which displays characters and images and the like. For example, the display device 625 may be a touch sensitive display screen.

The mobile telecommunication device may comprise a, smartphone, PDA, a laptop, a computer, a smart TV and the like.

The mobile telecommunication device 800 may be connected to a storage server 811 through a wireline (e.g. Ethernet) or a network 813 such as a cellular digital system telecommunication network. For example, the mobile telecommunication device 800 may be directly connected to the storage server 811 or via a base station (not shown) of the cellular-digital wireless telecommunication system. Using the transceiver 805, the mobile telecommunication device 800 may exchange data with the storage server 611 via the mobile cellular digital telecommunications network 813. The storage server 811 comprises a first storage device 812 and a second storage device 813. For example, the first storage device 812 may be a main memory and the second storage device 813 comprises disk-based storage. Thus, the first storage device 812 has higher data access performance than the second storage device 813.

Memory 807 is configured to store a plurality of applications that are executable on the processor 803. A first and second mobile application 815 and 817 of the mobile applications comprise first and second instructions respectively that, when executed, send data access requests to access data entries stored in the storage server 811. Further, when executed, they may generate on the display device 825 a first graphical user interface 827.

The data entries 814 may be stored in the storage server using a column-based storage technique. For example, the data entries may also be stored as shown with tables 412, 414 and 420. Column-based storage technique stores data in a sequence of columns, by for example, serializing all of the values of a column of a (corresponding) row-based stored table together, then the values of the next column, and so on. Row-based storage technique stores data in a sequence of rows. The data entries 814 may be initially stored in the second storage device 813. In another example, the data entries 814 may be initially randomly distributed over the first 812 and the second storage device 813. For example, the data entries may comprise one or more of tabular data, row-based data stored in row format, column-based data stored in columnar format.

The first mobile application 115 and second mobile application 117 when executed may initially perform access requests or queries all data entries 814 to search and process part of the data entries 814.

The mobile telecommunication device 800 further comprises a control unit 819 for controlling the execution of the first and second mobile applications 815 and 817.

The control unit 819 is adapted to classify, using the first instructions, the data entries 814 into at least a first and second data class. The first and second data classes are a description of the data entries 814 (e.g. they may describe the content, format, size, type etc. of the data entries). For example, the first data class may correspond to old data entries and second data class may correspond to new data entries (New and Old data entries are defined below). For classifying using the first instructions, the control unit 819 may parse the first instructions for determining an oldest creation date of data entries to be accessed by the first mobile application 815. For example, the first instructions may comprise an instruction that indicates the oldest creation date needed for analysis by the first mobile application 815. The parsing may comprise detecting variables or functions that indicate that oldest creation date. For that a reference table may be used for example. It may indicate which variables, functions or statements may indicate a creation date. The control unit 819 may read such creation dates, rank them and determine/identify the oldest creation date. The data entries of the first class 814a (e.g. New data entries) and second class 814b (Old data entries) have creation dates smaller and higher than the oldest creation date respectively.

The classifying of the data entries 814, may comprise for example, assigning, by the control unit 819, a first selection parameter to each data entry of the data entries 814. The first selection parameter has a first or a second value indicative of the first or second data class respectively. For example, the first selection parameter may be indicated to as "temperature" as shown in tables 412 and 420 it is. The first value in this case may be a "NULL" value and the second value may be "COLD". In another example, the first value may be a string having value "NEW" and the second value may be a string having value "OLD". For example, the mobile telecommunication device 800 may control the storage server 811 e.g. by sending a control message to the storage server 811 such that the storage server adds a column in the tables of data entries 814. Said column may indicate a field "first selection parameter", and each record associated with a data entry in that column may comprise the first value or the second value.

The control unit 819 is adapted to rank the first and second selection parameter values according to a predefined ranking criterion. For example, the first selection parameter having the first value "NEW" may be ranked superior to the first selection parameter having the second value "OLD".

Upon performing the ranking, the control unit 819 may send a request to the storage server 811 to store, in the first storage device 812, a first portion of the data entries 814a having the selection parameter value ranked superior and to store a second remaining portion 814b of the data entries 814 in the second storage device 813. In this way the access to the data entries 814a may be faster than access to those data entries 814b.

Further, the control unit 819 may classify, using the second instructions and the first selection parameter, the second portion of data entries 814b into at least a third and fourth data class. The third and fourth data classes are a description of the second portion of data entries 814b. For example, the third data class may correspond to less frequently accessed data entries of the second portion of data entries 814b and fourth data class may correspond to most frequently accessed data entries of the second portion of data entries 814b (less and most frequently accessed data entries are defined below). For classifying using the second instructions, the control unit 819 may parse the second instructions for determining the access frequency to data entries of the second portion of data entries 814b by the second mobile application 817. For example, the control unit may parse the second instructions for detecting a log listing in second mobile application 817 or a link to a log file e.g. stored in the mobile telecommunication device 800 containing the history of accessed data entries by the second mobile application 817. The control unit 819 may then read the log listing or log file for determining the access frequency to data entries of the second portion of data entries 814b.

The classifying of the second portion of data entries 814b, may comprise for example, assigning, by the control unit 819, a second selection parameter to each data entry of the second portion of data entries 814b stored in the second storage device 813. The second selection parameter has a value (e.g. "LESS FREQUENT" or "MOST FREQUENT") indicative of the third or fourth data class. For example, the mobile telecommunication device 800 may control the storage server 811 e.g. by sending a control message to the storage server 811 such that the storage server 811 adds another column in the tables of second portion of data entries 814b. Said column may indicate a field "second selection parameter", and each record associated with a data entry in that column may comprise a value indicating the third (e.g. a string having value "LESS FREQUENT") or the fourth (e.g. a string having value "MOST FREQUENT") data class.

The control unit 819 may send a request to the storage server 811 to move, to the first storage device 812, a subset of the second portion of data entries 814b having the third data class.

Next, the control unit 819 may configure the first mobile application 815 for redirecting data access requests to at least the first portion of data entries 814a. For example, the control unit 819 may rewrite the instructions for data access requests such that a condition on the first selection parameter may be added e.g. a condition that the first selection parameter has the value "NEW".

The control unit 819 may also configure the second mobile application 817 for redirecting data access requests to the first portion of data entries 814a and the subset of the second portion of data entries 814b having the third class. For example, the control unit 819 may rewrite the instructions for data access requests such that a condition on the first and second selection parameters may be added e.g. a condition that the first selection parameter has the value "NEW" and the second selection parameter has the value "MOST FREQUENT". Other combinations of values may also be used e.g. "NEW" and "LESS FREQUENT" or "OLD" and "MOST FREQUENT" and the like for the first and second selection parameters respectively.

Upon configuring the first and second mobile applications 815 and 817, the mobile telecommunication device 800 may execute the configured first and second mobile applications to operate the mobile telecommunication device 800 in the energy saving mode.

In an alternative example, the first selection parameter may have values "LESS FREQUENT" or "MOST FREQUENT" and the second selection parameter may have values "NEW" or "OLD". In another example, both first and second selection parameters may have values "NEW" or "OLD". In another example, both first and second selection parameters may have values "LESS FREQUENT" or "MOST FREQUENT".

**Claims**

1. A method for operating a mobile telecommunications device (800) in an energy saving mode in a telecommunication system (88), the telecommunication system (88) comprising a storage server (811) that is connected to the mobile telecommunication device (800), the mobile telecommunication device (800) comprising at least a first (815) and second mobile application (817) comprising first and second instructions respectively that, when executed, send data access requests to access data entries (814) stored in the storage server (811), the storage server (811) comprising a first and second storage devices (812, 813), the first storage device (812) having higher data access performance than the second storage device (814), wherein the data access performance comprises speed of the data access and/or Input/Output operations per time interval and/or a latency for each of read operations, the method comprising at the mobile telecommunication device the steps of:

   - classifying, using the first instructions, the data entries (814) into at least a first and second data class, the first and second data classes being a description of the data entries (814), comprising assigning a first selection parameter to each data entry of the data entries (814), the first selection parameter having a first or a second value indicative of the first or second data class respectively, the first selection parameter comprising the access frequency to a data entry;
   - ranking the first and second selection parameter values according to a predefined ranking criterion, wherein the first and second values indicate a high and low access frequency compared to a predefined access frequency threshold respectively;
   - sending a request to the storage server (811) to store, in the first storage device (812), a first portion of the data entries (814a) having the selection parameter value ranked superior compared to the other selection parameter value and to store a second remaining portion of the data entries (814b) in the second storage device (813);
   - classifying, using the second instructions and the first selection parameter, the second portion of data entries (814b) into at least a third and fourth data class, the third and fourth data classes being a description of the second portion of data entries, comprising
   - assigning a second selection parameter to each data entry of the second portion of data entries (814b) stored in the second storage device (812), the second selection parameter having a value indicative of the third or fourth data class, the second selection parameter comprising the access frequency to a data entry, wherein the third and fourth data classes indicate a high and low access frequency compared to a predefined access frequency threshold respectively;
   - sending a request to the storage server (811) to move, to the first storage device (812), a subset of the second portion of data entries having the third data class;
   - configuring the first mobile application (815) for redirecting data access requests to the said first portion of data entries (814a);
   - configuring the second mobile application (817) for redirecting data access requests to the said first portion of data entries and the said subset of the second portion of data entries;
- executing the configured first and second mobile applications (815, 817) to operate the mobile telecommunication device (800) in the energy saving mode, wherein the first and second mobile applications are configured to concurrently run in the mobile telecommunication device.

2. The method of claim 1, wherein classifying using the first instructions comprises processing the first instructions on multiple data portions of the data entries, determining the system load level caused by the access to each data portion of the multiple data portions, comparing the system load levels with a predefined load threshold and determining the first and second class of data entries based on the results of the comparison.

3. The method of claim 1, wherein classifying using the first instructions comprises parsing the first instructions for determining an oldest creation date of data entries to be accessed by the first mobile application, wherein data entries of the first class and second class have creation dates smaller and higher than the oldest creation date respectively.

4. The method of claim 1, wherein the first and second data classes are predefined data classes by a user of the mobile telecommunications device.

5. The method of any of preceding claims, wherein classifying using the second instructions and the first selection parameter comprises providing the second selection parameter different from the first selection parameter, parsing the second instructions for determining an oldest creation date of data entries to be accessed by the second mobile application, wherein data entries of the third and fourth classes have creation dates smaller and higher than the oldest creation date respectively.

6. The method of claim 2, wherein the predefined ranking criterion comprises a system load level, wherein ranking comprises ranking one parameter value of the first and second parameter values superior to the other parameter value if it has a higher system load level.

7. The method of claim 3, wherein the predefined ranking criterion comprises a data entry age, wherein ranking comprises ranking one parameter value of the first and second parameter values superior to the other parameter value if it has a youngest creation date.

8. The method of any of the preceding claims, wherein redirecting data access requests of the first mobile application comprises rewriting a query from the first mobile application to exclude entries of the second portion of data entries.

9. The method of claim 8, wherein the query is a structured query language statement and said re-writing comprises automatically appending a statement extension to the structured query language statement string.

10. The method of any of preceding claims, wherein the first mobile application is an updated version of the second mobile application, wherein executing further comprises comparing the results of processing the first mobile application with the results of processing the second mobile application and maintaining one of the first and second mobile applications in the mobile telecommunication device based on the comparison result.

11. The method of any of preceding claims 1-10, wherein the first mobile application is an OLTP application and the second mobile application is an OLAP application.

12. The method of any of the preceding claims, wherein the first storage device comprises in-memory columnar storage and the second storage device comprises disk-based storage.

13. A mobile telecommunications device for a telecommunication system, the telecommunication system comprising a storage server that is connected to the mobile telecommunications device, the mobile telecommunication device comprising at least a first and second mobile application comprising first and second instructions respectively that, when executed, send data access requests to access data entries stored in the storage server, the storage server comprising a first and second storage devices, the first storage device having higher data access performance than the second storage device, wherein the data access performance comprises speed of the data access and/or Input/Output operations per time interval and/or a latency for each of read operations, the mobile telecommunication device being configured for:

- classifying, using the first instructions, the data entries into at least a first and second data class, the first and second data classes being a description of the data entries, comprising

o assigning a first selection parameter to each data entry of the data entries, the first selection parameter having a first or a second value indicative of the first or second data class respectively, the first selection parameter comprising the access frequency to a data entry;
o ranking the first and second selection parameter values according to a predefined ranking criterion, wherein the first and second values indicate a high and low access frequency compared to a predefined access frequency threshold respectively;

- sending a request to the storage server to store, in the first storage device, a first portion of the data entries having the selection parameter value ranked superior compared to the other selection parameter value and to store a second remaining portion of the data entries in the second storage device;
- classifying, using the second instructions and the first selection parameter, the first portion of data entries into at least a third and fourth data class, the third and fourth data classes being a description of the first portion of data entries, comprising

o assigning a second selection parameter to each data entry of the second portion of data entries stored in the second storage device, the second selection parameter having a value indicative of the third or fourth data class, the second selection parameter comprising the access frequency to a data entry, wherein the third and fourth data classes indicate a high and low access frequency compared to a predefined access frequency threshold respectively;

- sending a request to the storage server (811) to move, to the first storage device (812), a subset of the second portion of data entries having the third data class;
- configuring the first mobile application for redirecting data access requests to the said first portion of data entries;
- configuring the second mobile application for redirecting data access requests to the said first portion of data entries and the said subset of the second portion of data entries;
- executing the configured first and second mobile applications to operate the mobile telecommunication device in the energy saving mode, wherein the first and second mobile applications are configured to concurrently run in the mobile telecommunication device.

**Patentansprüche**

1. Verfahren zum Betreiben einer Mobiltelekommunikationsvorrichtung (800) in einem Energiesparmodus in einem Telekommunikationssystem (88), wobei das Telekommunikationssystem (88) einen Speicherserver (811) aufweist, der mit der Mobiltelekommunikationsvorrichtung (800) verbunden ist, wobei die Mobiltelekommunikationsvorrichtung (800) wenigstens eine erste (815) und eine zweite mobile Anwendung (817) aufweist, die erste bzw. zweiten Anweisungen aufweisen, die bei Ausführung Datenzugriffsanforderungen für den Zugriff auf im Speicherserver (811) gespeicherte Dateneinträge (814) senden, wobei der Speicherserver (811) eine erste und eine zweite Speichervorrichtung (812, 813) aufweist, wobei die erste Speichervorrichtung (812) eine höhere Datenzugriffsleistung hat als die zweite Speichervorrichtung (814), wobei die Datenzugriffsleistung Geschwindigkeit des Datenzugriffs und/oder Eingabe-/Ausgabeoperationen pro Zeitintervall und/oder eine Latenz für jede Leseoperation aufweist, wobei das Verfahren an der Mobiltelekommunikationsvorrichtung die folgenden Schritte aufweist:

- Klassifizieren der Dateneinträge (814) unter Verwendung der ersten Anweisungen in wenigstens eine erste und eine zweite Datenklasse, wobei die erste und die zweite Datenklasse eine Beschreibung der Dateneinträge (814) sind, das das Zuweisen eines ersten Auswahlparameters zu jedem Dateneintrag der Dateneinträge (814) aufweist, wobei der erste Auswahlparameter einen ersten oder einen zweiten Wert hat, der die erste bzw. die zweite Datenklasse anzeigt, wobei der erste Auswahlparameter die Häufigkeit des Zugriffs auf einen Dateneintrag aufweist;
- Einstufen der ersten und zweiten Auswahlparameterwerte gemäß einem vordefinierten Einstufungskriterium, wobei die ersten und zweiten Werte, verglichen mit einer vordefinierten Zugriffshäufigkeitsschwelle, eine hohe bzw. eine niedrige Zugriffshäufigkeit anzeigen;
- Senden einer Anforderung an den Speicherserver (811) zum Speichern eines ersten Teils der Dateneinträge (814a) mit dem Auswahlparameterwert, der gegenüber dem anderen Auswahlparameterwert höher eingestuft ist, und zum Speichern eines zweiten übrigen Teils der Dateneinträge (814b) in der zweiten Speichervorrichtung (813);
- Klassifizieren des zweiten Teils von Dateneinträgen (814b) unter Verwendung der zweiten Anweisungen und des ersten Auswahlparameters in wenigstens eine dritte und eine vierte Datenklasse, wobei die dritte und die vierte Datenklasse eine Beschreibung des zweiten Teils von Dateneinträgen ist, aufweisend:

- Zuweisen eines zweiten Auswahlparameters zu jedem in der zweiten Speichervorrichtung (812) gespeicherten Dateneintrag des zweiten Teils von Dateneinträgen (814b), wobei der zweite Datenauswahlparameter einen Wert hat, der die dritte oder die vierte Datenklasse anzeigt, wobei der zweite Auswahlparameter die Häufigkeit des Zugriffs auf einen Dateneintrag aufweist, wobei die dritte und die vierte Datenklasse eine hohe bzw. eine niedrige Zugriffshäufigkeit gegenüber einer vordefinierten Zugriffshäufigkeitsschwelle anzeigen;
- Senden einer Anforderung an den Speicherserver (811) zum Bewegen einer Teilmenge des zweiten Teils von Dateneinträgen mit der dritten Datenklasse zur ersten Speichervorrichtung (812);
- Konfigurieren der ersten mobilen Anwendung (815) zum Umleiten von Datenzugriffsanforderungen zu dem genannten ersten Teil von Dateneinträgen (814a);
- Konfigurieren der zweiten mobilen Anwendung (817) zum Umleiten von Datenzugriffsanforderungen zu dem genannten ersten Teil von Dateneinträgen und der genannten Teilmenge des zweiten Teils von Dateneinträgen;
- Ausführen der konfigurierten ersten und zweiten mobilen Anwendung (815, 817) zum Betreiben der Mobiltelekommunikationsvorrichtung (800) im Energiesparmodus, wobei die erste und die zweite mobile Anwendung konfiguriert sind, um gleichzeitig in der Mobiltelekommunikationsvorrichtung zu laufen.

2. Verfahren nach Anspruch 1, wobei das Klassifizieren unter Verwendung der ersten Anweisungen das Verarbeiten der ersten Anweisungen an mehreren Datenteilen der Dateneinträge, Bestimmen der durch den Zugriff auf jeden Datenteil der mehreren Datenteile verursachten Systembelastungshöhe, Vergleichen der Systembelastungshöhen mit einer vordefinierten Belastungsschwelle und Bestimmen der Dateneinträge der ersten und zweiten Klasse auf Basis der Ergebnisse des Vergleichs aufweist.

3. Verfahren nach Anspruch 1, wobei das Klassifizieren unter Verwendung der ersten Anweisungen das Parsen der ersten Anweisungen zum Bestimmen eines ältesten Erstellungsdatums von Dateneinträgen, auf die von der ersten mobilen Anwendung zuzugreifen ist, aufweist, wobei Dateneinträge der ersten Klasse und der zweiten Klasse kleinere bzw. höhere Erstellungsdaten als das älteste Erstellungsdatum haben.

4. Verfahren nach Anspruch 1, wobei die erste und die zweite Datenklasse von einem Benutzer der Mobiltelekommunikationsvorrichtung vordefinierte Datenklassen sind.

5. Verfahren nach einem der vorhergehenden Ansprüche, wobei das Klassifizieren unter Verwendung der zweiten Anweisungen und des ersten Auswahlparameters das Bereitstellen des zweiten Auswahlparameters, der vom ersten Auswahlparameter verschieden ist, Parsen der zweiten Anweisungen zum Bestimmen eines ältesten Erstellungsdatums von Dateneinträgen, auf die von der zweiten mobilen Anwendung zuzugreifen ist, aufweist, wobei Dateneinträge der dritten und der vierten Klasse kleinere bzw. höhere Erstellungsdaten als das älteste Erstellungsdatum haben.

6. Verfahren nach Anspruch 2, wobei das vordefinierte Einstufungskriterium eine Systembelastungshöhe aufweist, wobei das Einstufen das höhere Einstufen eines Parameterwerts des ersten und des zweiten Parameterwerts gegenüber dem anderen Parameterwert aufweist, wenn er eine höhere Systembelastungshöhe hat.

7. Verfahren nach Anspruch 3, wobei das vordefinierte Einstufungskriterium ein Dateneintragsalter aufweist, wobei das Einstufen das höhere Einstufen eines Parameterwerts des ersten und des zweiten Parameterwerts gegenüber dem anderen Parameter aufweist, wenn er ein jüngstes Erstellungsdatum hat.

8. Verfahren nach einem der vorhergehenden Ansprüche, wobei das Umleiten von Datenzugriffsanforderungen der ersten mobilen Anwendung das Neuschreiben einer Anfrage von der ersten mobilen Anwendung zum Ausschließen von Einträgen des zweiten Teils von Dateneinträgen aufweist.

9. Verfahren nach Anspruch 8, wobei die Anfrage ein Structured Query Language-Statement ist und das genannte Neuschreiben das automatische Anhängen einer Statement-Extension an die Structured Query Language-Zeichenkette aufweist.

**10.** Verfahren nach einem der vorhergehenden Ansprüche, wobei die erste mobile Anwendung eine aktualisierte Version der zweiten mobilen Anwendung ist, wobei das Ausführen ferner das Vergleichen der Ergebnisse des Verarbeitens der ersten mobilen Anwendung mit den Ergebnissen des Verarbeitens der zweiten mobilen Anwendung und Warten einer von der ersten und der zweiten mobilen Anwendung in der Mobiltelekommunikationsvorrichtung auf Basis des Vergleichsergebnisses aufweist.

**11.** Verfahren nach einem der vorhergehenden Ansprüche 1 bis 10, wobei die erste mobile Anwendung eine OLTP-Anwendung ist und die zweite mobile Anwendung eine OLAP-Anwendung ist.

**12.** Verfahren nach einem der vorhergehenden Ansprüche, wobei die erste Speichervorrichtung spaltenorientierte In-Memory-Speicherung aufweist und die zweite Speichereinrichtung plattenbasierte Speicherung aufweist.

**13.** Mobiltelekommunikationsvorrichtung für ein Telekommunikationssystem, wobei das Telekommunikationssystem einen Speicherserver aufweist, der mit der Mobiltelekommunikationsvorrichtung verbunden ist, wobei die Mobiltelekommunikationsvorrichtung wenigstens eine erste und eine zweite mobile Anwendung aufweist, die erste bzw. zweiten Anweisungen aufweisen, die bei Ausführung Datenzugriffsanforderungen für den Zugriff auf im Speicherserver gespeicherte Dateneinträge senden, wobei der Speicherserver eine erste und eine zweite Speichervorrichtung aufweist, wobei die erste Speichervorrichtung eine höhere Datenzugriffsleistung hat als die zweite Speichervorrichtung, wobei die Datenzugriffsleistung Geschwindigkeit des Datenzugriffs und/oder Eingabe-/Ausgabeoperationen pro Zeitintervall und/oder eine Latenz für jede Leseoperation aufweist, wobei das Verfahren an der Mobiltelekommunikationsvorrichtung die folgenden Schritte aufweist:

- Klassifizieren der Dateneinträge unter Verwendung der ersten Anweisungen in wenigstens eine erste und eine zweite Datenklasse, wobei die erste und die zweite Datenklasse eine Beschreibung der Dateneinträge sind, das aufweist

o Zuweisen eines ersten Auswahlparameters zu jedem Dateneintrag der Dateneinträge, wobei der erste Auswahlparameter einen ersten oder einen zweiten Wert hat, der die erste bzw. die zweite Datenklasse anzeigt, wobei der erste Auswahlparameter die Häufigkeit des Zugriffs auf einen Dateneintrag aufweist;
o Einstufen der ersten und zweiten Auswahlparameterwerte gemäß einem vordefinierten Einstufungskriterium, wobei die ersten und zweiten Werte, verglichen mit einer vordefinierten Zugriffshäufigkeitsschwelle, eine hohe bzw. eine niedrige Zugriffshäufigkeit anzeigen;

- Senden einer Anforderung an den Speicherserver zum Speichern eines ersten Teils der Dateneinträge mit dem Auswahlparameterwert, der gegenüber dem anderen Auswahlparameterwert höher eingestuft ist, und zum Speichern eines zweiten übrigen Teils der Dateneinträge in der zweiten Speichervorrichtung;
- Klassifizieren des ersten Teils von Dateneinträgen unter Verwendung der zweiten Anweisungen und des ersten Auswahlparameters in wenigstens eine dritte und eine vierte Datenklasse, wobei die dritte und die vierte Datenklasse eine Beschreibung des ersten Teils von Dateneinträgen ist, aufweisend:

o Zuweisen eines zweiten Auswahlparameters zu jedem in der zweiten Speichervorrichtung gespeicherten Dateneintrag des zweiten Teils von Dateneinträgen, wobei der zweite Datenauswahlparameter einen Wert hat, der die dritte oder die vierte Datenklasse anzeigt, wobei der zweite Auswahlparameter die Häufigkeit des Zugriffs auf einen Dateneintrag aufweist, wobei die dritte und die vierte Datenklasse eine hohe bzw. eine niedrige Zugriffshäufigkeit gegenüber einer vordefinierten Zugriffshäufigkeitsschwelle anzeigen;

- Senden einer Anforderung an den Speicherserver (811) zum Bewegen einer Teilmenge des zweiten Teils von Dateneinträgen mit der dritten Datenklasse zur ersten Speichervorrichtung;
- Konfigurieren der ersten mobilen Anwendung zum Umleiten von Datenzugriffsanforderungen zu dem genannten ersten Teil von Dateneinträgen;
- Konfigurieren der zweiten mobilen Anwendung zum Umleiten von Datenzugriffsanforderungen zu dem genannten ersten Teil von Dateneinträgen und der genannten Teilmenge des zweiten Teils von Dateneinträgen;
- Ausführen der konfigurierten ersten und zweiten mobilen Anwendung zum Betreiben der Mobiltelekommunikationsvorrichtung im Energiesparmodus, wobei die erste und die zweite mobile Anwendung konfiguriert sind, um gleichzeitig in der Mobiltelekommunikationsvorrichtung zu laufen.

**Revendications**

1. Procédé d'exploitation d'un dispositif mobile de télécommunication (800) dans un mode d'économie de l'énergie dans un système de télécommunication (88), le système de télécommunication (88) comprenant un serveur de stockage (811) qui est connecté au dispositif mobile de télécommunication (800), le dispositif mobile de télécommunication (800) comprenant au moins une première (815) et une seconde (817) application comprenant respectivement une première et une seconde instruction qui, lorsqu'elles sont exécutées, envoient des demandes d'accès aux données à des entrées des données d'accès (814) stockées dans le serveur de stockage (811), le serveur de stockage (811) comprenant un premier et un second dispositifs de stockage (812, 813), le premier dispositif de stockage (812) ayant une efficacité pour accéder aux données plus élevée que le second dispositif de stockage (814), où l'efficacité pour accéder aux données comprend la vitesse d'accès aux données et/ou les entrées/sorties par intervalle de temps et/ou la latence pour chacune des opérations de lecture, le procédé comprenant au niveau du dispositif mobile de télécommunication les étapes de :

   - classification, en utilisant les premières instructions, des entrées des données (814) dans au moins une première et une deuxième classe de données, la première et la deuxième classe de données étant une description des entrées des données (814), comprenant l'affectation d'un premier paramètre de sélection à chacune des entrées de données des entrées de données (814), le premier paramètre de sélection ayant une première ou une seconde valeurs indicatrices respectivement de la première ou de la deuxième classe de données, le premier paramètre de sélection comprenant la fréquence d'accès à une entrée de données ;
   - classement des première et seconde valeurs du paramètre de sélection selon un critère de classement prédéfini, où les première et seconde valeurs indiquent respectivement une fréquence d'accès élevée et faible par comparaison avec un seuil de fréquence d'accès prédéfini ;
   - envoi d'une demande au serveur de stockage (811) pour stocker, dans le premier dispositif de stockage (812), une première partie des entrées de données (814a) ayant la valeur du paramètre de sélection la plus élevée dans le classement par comparaison avec l'autre valeur du paramètre de sélection et pour stocker la seconde partie restante des entrées de données (814b) dans le second dispositif de stockage (813) ;
   - classification, en utilisant les secondes instructions et le premier paramètre de sélection, de la seconde partie des entrées (814b) dans au moins une troisième et une quatrième classe de données, les troisième et quatrième classes étant une description de la seconde partie des entrées de données, comprenant
   - affectation d'un second paramètre de sélection à chacune des entrées de données de la seconde partie des entrées de données (814b) stockée dans le second dispositif de stockage (812), le second paramètre de sélection ayant une valeur indicatrice de la troisième ou de la quatrième classe de données, le second paramètre de sélection comprenant la fréquence d'accès à une entrée de données, où les troisième et quatrième classes de données indiquent respectivement une fréquence d'accès élevé et faible par comparaison à un seuil de fréquence d'accès prédéfini ;
   - envoi une demande au serveur de stockage (811) pour déplacer, vers le premier dispositif de stockage (812), un sous-ensemble de la seconde partie des entrées de données ayant la troisième classe de données ;
   - configuration de la première application mobile (815) pour rediriger les demandes d'accès aux données vers ladite première partie des entrées de données (814a);
   - configuration de la seconde application mobile (817) pour rediriger les demandes d'accès aux données vers ladite première partie des entrées de données et ledit sous-ensemble de la seconde partie des entrées de données ;
   - exécution de la première et de la seconde application mobile configurées (815, 817) pour exploiter le dispositif mobile de télécommunication (800) dans le mode d'économie de l'énergie, où la première et la seconde applications mobiles sont configurées pour être exécutées simultanément dans le dispositif mobile de télécommunication.

2. Procédé selon la revendication 1, dans lequel la classification utilisant les premières instructions comprend le traitement des premières instructions sur les parties de données multiples, déterminant le niveau de chargement du système provoqué par chacune des parties de données de parties de données multiples, comparant les niveaux de chargement du système avec un seuil de chargement prédéfini et déterminant la première et la seconde classe des entrées de données sur la base des résultats de la comparaison.

3. Procédé selon la revendication 1, dans lequel la classification utilisant les premières instructions comprend l'analyse grammaticale des premières instructions pour déterminer la date de création de la plus ancienne des entrées de données auxquelles la première application mobile a eu accès, où les entrées de données de la première classe et de la seconde classe ont respectivement des dates de création plus récentes et plus éloignées que la date de création la plus ancienne.

**4.** Procédé selon la revendication 1, dans lequel la première et la seconde classe de données sont des classes de données prédéfinies par un utilisateur du dispositif mobile de télécommunication.

**5.** Procédé selon l'une quelconque des revendications précédentes, dans lequel la classification utilisant les secondes instructions et le premier paramètre de sélection comprend la fourniture du second paramètre de sélection différent du premier paramètre de sélection, l'analyse grammaticale des secondes instructions pour déterminer la date de création la plus ancienne des entrées de données auxquelles la seconde application mobile a eu accès, où les entrées de données de la troisième et de la quatrième classe ont des date de création respectivement plus récentes et plus éloignées que la date de création la plus ancienne.

**6.** Procédé selon la revendication 2, dans lequel le critère de classement prédéfini comprend un niveau de chargement du système, où le classement comprend le classement d'une seule valeur de paramètre de la première et de la seconde valeur de paramètre supérieure à l'autre valeur de paramètres si elle a un niveau de chargement du système plus élevé.

**7.** Procédé selon la revendication 3, dans lequel le critère de classement prédéfini comprend un âge d'entrée des données, où le classement comprend le classement d'une seule valeur de paramètre de la première et de la seconde valeur de paramètre supérieure à l'autre valeur de paramètres si elle a la date de création la plus récente.

**8.** Procédé selon l'une quelconque des revendications précédentes, dans lequel la redirection des demandes d'accès des données de la première application mobile comprend la réécriture d'une requête en provenance de la première application mobile pour exclure les entrées de la seconde partie des entrées de données.

**9.** Procédé selon la revendication 8, dans lequel la requête est une instruction de langage de requête structuré et ladite réécriture comprend automatiquement l'ajout d'une extension d'instruction à la chaîne d'instructions du langage de requête structuré.

**10.** Procédé selon l'une quelconque des revendications précédentes, dans lequel la première application mobile est une version mise à jour de la seconde application mobile, où l'exécution comprend en outre la comparaison des résultats du traitement de la première application mobile avec les résultats de la seconde application mobile et le maintien d'une seule parmi la première et la seconde application mobile dans le dispositif mobile de télécommunication sur la base du résultat de la comparaison.

**11.** Procédé selon l'une quelconque des revendications 1 à 10 précédentes, dans lequel la première application mobile est une application de traitement transactionnel en ligne OLTP et la seconde application mobile est une application de traitement analytique en ligne OLAP.

**12.** Procédé selon l'une quelconque des revendications précédentes, dans lequel le premier dispositif de stockage comprend un stockage en mémoire par colonnes et le second dispositif de stockage comprend un stockage sur la base de disques.

**13.** Dispositif mobile de télécommunication pour un système de télécommunication, le système de télécommunication comprenant un serveur de stockage qui est connecté au dispositif mobile de télécommunication, le dispositif mobile de télécommunication comprenant au moins une première et une seconde application mobile comprenant respectivement des premières et des secondes instructions qui, quand elles sont exécutées, envoient des demandes d'accès aux données vers les entrées de données d'accès stockées dans le serveur de stockage, le serveur de stockage comprenant un premier et un second dispositif de stockage, le premier dispositif de stockage ayant une efficacité pour accéder aux données plus levée que celle du second dispositif de stockage, où l'efficacité de l'accès aux données comprend la vitesse d'accès aux données et/ou les entrées/sorties par intervalle de temps et/ou la latence pour chacune des opérations de lecture, le dispositif mobile de télécommunication étant configuré pour :

- la classification, en utilisant les premières instructions, des entrées des données dans au moins une première et une seconde deuxième classe de données, la première et la deuxième classe de données étant une description des entrée des données, comprenant

◦ l'affectation d'un premier paramètre de sélection à chacune des entrées de données des entrées de données, le premier paramètre de sélection ayant une première ou une seconde valeur indicatrice respectivement de la première ou de la deuxième classe de données, le premier paramètre de sélection comprenant la fréquence d'accès à une entrée de données ;

◦ le classement de la première et de la seconde valeur du paramètre de sélection selon un critère de classement prédéfini, où la première et la seconde valeur indiquent respectivement une fréquence d'accès élevée et faible par comparaison avec un seuil de fréquence d'accès prédéfini ;

- l'envoi d'une demande au serveur de stockage pour stocker, dans le premier dispositif de stockage, la première partie des entrées de données ayant la valeur du paramètre de sélection la plus élevée dans le classement par comparaison avec l'autre valeur du paramètre de sélection et pour stocker la seconde partie restante des entrées de données dans le second dispositif de stockage ;

- la classification, en utilisant les secondes instructions et le premier paramètre de sélection, de la première partie des entrées dans au moins une troisième et une quatrième classe de données, les troisième et quatrième classes étant une description de la première partie des entrées de données, comprenant

◦ l'affectation d'un second paramètre de sélection à chacune des entrées de données de la seconde partie des entrées de données stockée dans le second dispositif de stockage, le second paramètre de sélection ayant une valeur indicatrice de la troisième ou de la quatrième classe de données, le second paramètre de sélection comprenant la fréquence d'accès à une entrée de données, où la troisième et la quatrième classes de données indiquent respectivement une fréquence d'accès élevé et faible par comparaison ave un seuil de fréquence d'accès prédéfini ;

- l'envoi une demande au serveur de stockage (811) pour déplacer, vers le premier dispositif de stockage (812), un sous-ensemble de la seconde partie des entrées de données ayant la troisième classe de données ;
- la configuration de la première application mobile pour rediriger les demandes d'accès aux données vers ladite première partie des entrées de données ;
- la configuration de la seconde application mobile pour rediriger les demandes d'accès aux données vers ladite première partie des entrées de données et ledit sous-ensemble de la seconde partie des entrées de données ;
- l'exécution de la première et de la seconde application mobile configurées pour exploiter le dispositif mobile de télécommunication dans le mode d'économie de l'énergie, où la première et la seconde application mobile sont configurées pour être exécutées simultanément dans le dispositif mobile de télécommunication.

100

120

CLIENT

130

QUERY SERVER

140

METADATA

110

DATA SOURCE

*FIG. 1*

200

S210

Store Database, Containing Entries, Across First
And Second Storage Medium (entries In The
Second Storage Medium Being Default Invisible For
OLTP)

S220

Identify A Subset Of The Entries Stored In The First
Storage Medium As Being Default Visible For OLTP
(Entries Stored In The First Storage Medium Not
Within The Subset Default Invisible For OLTP)

S230

Store A Date Into Aging Column For An Entry To
Transition The Entry Out Of The Subset That Is
Default Visible For OLTP

S240

Transition Entry From The First Storage Medium
To The Second Storage Medium Based On
A Technical Configuration

FIG. 2

300

FIRST STORAGE MEDIUM
(IN-MEMORY COLUMNAR STORAGE)

310

330

OLTP HOT
SUBSET
(INCLUDING
CODED
ALGORITHM
PORTION AND
CUSTOMER-
DEFINED
REMAINING
PORTION)

| ENTRY |
| ENTRY |
|  |

DEFAULT VISIBLE
FOR ONLINE
TRANSACTIONAL
PROCESSING

DEFAULT
INVISIBLE FOR
ONLINE
TRANSACTIONAL
PROCESSING

SECOND STORAGE MEDIUM
(DISK-BASED STORAGE)

320

DEFAULT
INVISIBLE FOR
ONLINE
TRANSACTIONAL
PROCESSING

FIG. 3

400 ⟍

410

| PO ID | Name | Address | State | Temperature |
|---|---|---|---|---|
| P132 | ~~~~~~~ | ~~~~~~~ | ~~~~~~~ | |
| P434 | ~~~~~~~ | ~~~~~~~ | ~~~~~~~ | |
| P562 | ~~~~~~~ | ~~~~~~~ | ~~~~~~~ | |
| P855 | John Smith | 123 Elm Street | New York | |

412

414

| PO ID | Name | Address | State | Temperature |
|---|---|---|---|---|
| P432 | ~~~~~~~ | ~~~~~~~ | ~~~~~~~ | COLD (Date) |
| P812 | ~~~~~~~ | ~~~~~~~ | ~~~~~~~ | COLD (Date) |
| P136 | ~~~~~~~ | ~~~~~~~ | ~~~~~~~ | COLD (Date) |
| P286 | ~~~~~~~ | ~~~~~~~ | ~~~~~~~ | COLD (Date) |

420

| PO ID | Name | Address | State |
|---|---|---|---|
| P763 | ~~~~~~~ | ~~~~~~~ | ~~~~~~~ |
| P002 | ~~~~~~~ | ~~~~~~~ | ~~~~~~~ |
| P987 | ~~~~~~~ | ~~~~~~~ | ~~~~~~~ |
| P338 | ~~~~~~~ | ~~~~~~~ | ~~~~~~~ |

*FIG. 4*

*FIG. 5*

*FIG. 6*

700

S710

Receive Query To Access Database

S720

Is It A Default
Access ?

No

S730

Execute Query

Yes

S740

Re-Write Query By Modifying SQL
Statement String To Append
Extension (By Database Shared
Library Layer)

S750

Arrange For Access In Accordance
With Re-Written Query

FIG. 7

88

805

803

815 817

819

807

809

800

813

811

814a    814b

812     813

827

825

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011314071 A